# EUROPEAN PATENT APPLICATION

(11) **EP 1 404 007 A1**
(43) Date of publication of application: **31.03.2004**
(21) Application number: 03021770.7
(22) Date of filing: 25.09.2003
(51) Int. Cl.: H02K 3/52

(54) **Device and method of connecting a resolver**

(30) Priority: 25.09.2002 JP 2002279578
(71) Applicant: Miya, Taiichi, Tokyo 143-8543 (JP); Kujirai, Hiroyuki, Tokyo 143-8543 (JP)
(72) Inventor: Miya, Taiichi, Tokyo 143-8543 (JP); Kujirai, Hiroyuki, Tokyo 143-8543 (JP)
(74) Representative: Konle, Tilmar, Dipl.-Ing.

(57) **Abstract**

For a resolver I/O terminal structure that can withstand use at high temperatures, and for a resolver connection method the following is provided:
A stator core (2), one insulating member (5) and another insulating member (6), and a lead line terminal block (8) for connecting a lead line (9) to a stator coil wire (35), where said stator core (2) is fabricated with a protrusion part (11) that has, on its inside, an indentation part (12) into which said lead line terminal block (8) is fitted. The lead line terminal block (8) not only has a through groove (33), but also has a mating protrusion part (24) that mates with a through hole (26) that is fabricated in the other insulating member (6), and multiple lead line fastening grooves (32). Furthermore, a flat terminal (10) provided with a flat terminal pin part (29) for connecting the lead line (9) and the stator coil wire (35) is equipped so as to cut across said through groove (32), where the lead line terminal block (8), to which said flat terminal (10) is attached, is attached to the stator core (2), on which the stator coil wire (35) is wound and where said stator coil wire (35) is fastened through resistive welding to a weld part (38) of said flat terminal (10), and where the flat terminal pin part (29) and a connector part (30) pressed onto the tip of the lead line (9) are arc welded to each other.

## Description

### (Field of Technology of the Present Invention)

The present invention relates to resolver I/O terminal structures that can endure use at high temperatures, and to resolver connection methods using said structures.

### (Prior Art)

Various types of resolvers have been developed in order to reduce the size of the resolvers and increase their performance. For example, there are resolvers that are structured by providing pins in an insulator extension part, which is integrated with the insulating member, where the stator coil wires are connected to these pins and the lead lines or connectors are then connected. (See, for example, Patent Reference 1.) These resolvers successfully reduced the use of insulating material, and successfully reduced the resolver size, by connecting the stator coil wires to the pins equipped in the insulating members. However, because the insulating extension part was integrated with the insulating member, there was the drawback that [the structure] was weak when it comes to retraction forces.

On the other hand, there were also resolvers that had connectors with either female connector pins or male connector pins integrated with an insulating cover, in order to increase the aforementioned retraction force, where not only would the aforementioned stator coils be connected to said connector pins, but also external connectors could be connected to and disconnected from said connectors freely. (See, for example, Patent Reference 2.) Although these resolvers were strong when it comes to the aforementioned retraction because they were equipped with connectors that had connector pins integrated with the insulating cover, reducing the size [of said resolvers] was difficult.

There were also resolvers structured, as a way to resolve the aforementioned problem areas, by providing terminal holders within notched parts fabricated at a part of the outer periphery of a ring-shaped stator where lead lines were provided along the axial direction of the ring-shaped stator, and where the various covers were made flat in order to achieve a structure that was thinner and that had a smaller diameter. (See, for example, Patent Reference 3.)

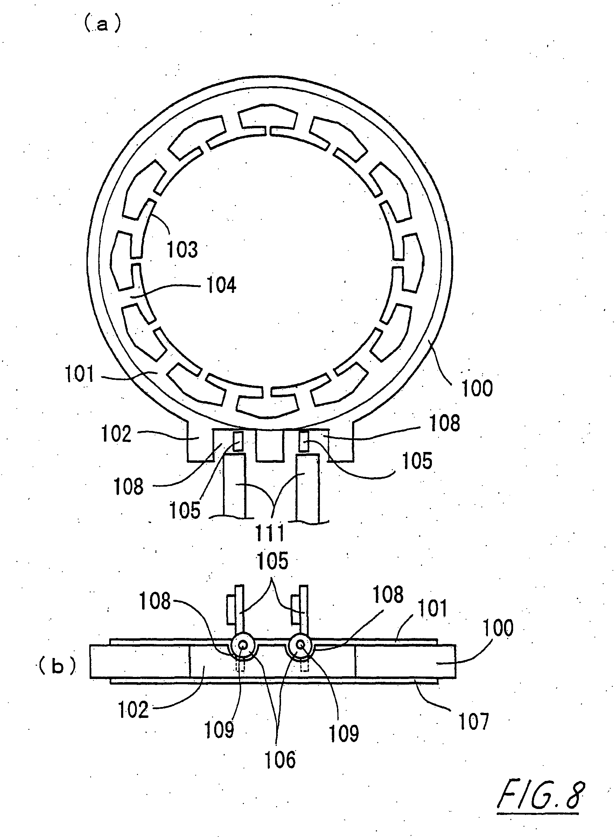

The use temperatures for all of the resolvers described above were normal temperatures, and none could withstand use in particularly high temperatures. Resolvers capable of withstanding use at high temperatures are structured, for example, as shown in Figure 8. As is shown in Figure 8, the stator in the resolver is equipped with a stator core 100 that comprises multiple layers of plates with protruding stator magnetic poles 104 that have multiple stator magnetic pole teeth 103 protruding in a direction facing the center of a yoke part, one insulating member 101 and another insulating member 107 equipped, respectively, on both sides of said stator core 100, and stator coil wires, not shown, wrapped around said stator magnetic poles 104. Protrusion parts 102 are fabricated on the periphery of the stator core 100, a groove 108 to hold the lead lines 111 is fabricated on said protrusion part 102, and a terminal plate 105 is equipped in said groove 108.

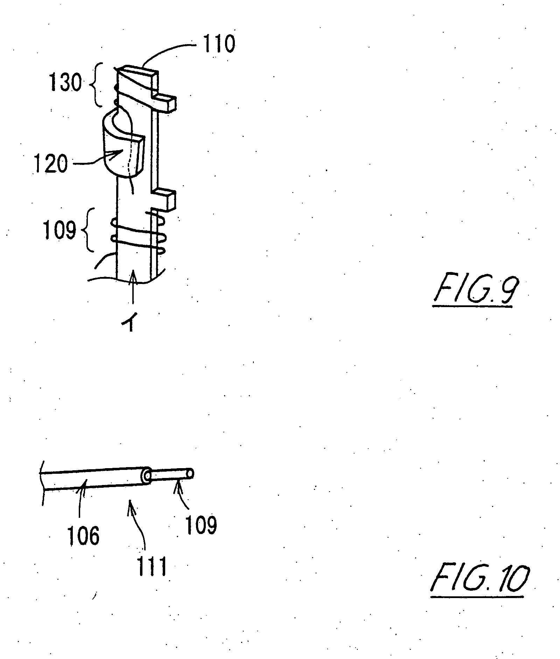

As is shown in Figure 9, said terminal plate 105 is fabricated with the bottom part (i) rooted in said groove 108, and a rim-shaped weld part 120 is bent at the top part. The stator coil wire end 130, which is wrapped on the top part of the terminal plate 105, passes between the weld parts 120, and then is resistance welded or high-temperature soldered to said weld part 120. Additionally, as shown in Figure 10, the core 109 in the lead line 111 is covered with a covering 106, where the tip 109 is wrapped under the weld part 120 of said terminal plate 105 after removing said covering 106 using a mechanical method or a chemical method. Note that in Figure 8, the tip 109 of the lead line 111 is not shown.

### (Patent Reference 1)

Japanese Unexamined Patent Application Publication H10-309067 (Figure 1) (Patent Reference 2)

Japanese Unexamined Patent Application Publication 2001-330472 (Figure 1) (Patent Reference 3)

Japanese Unexamined Patent Application Publication 2001-56237 (Figure 1)

### (Problem the Present Invention Attempts to Solve)

The resolver shown in Figure 8, described above, is difficult in terms of miniaturization and in terms of automation. The reason for this is that in resolvers with high ambient temperatures, the insulation durability of the stator coil wires is high, using, for example, polyamidimid, but the connections require resistive welding or high-temperature soldering.

For resistive welding, not only is there the need for the weld part to be large enough to handle the electrode of the resistive welder, but also terminal plates 105 must be equipped in said groove 108, and [thus] it is difficult to reduce the overall size of the terminal plates 105. Furthermore, because polyamidimid wires are used for the stator coil wires, there are problems in terms of reliability and in terms of ease of operation because of the need to remove the insulation coating, using a mechanical or a chemical method, when performing high-temperature soldering. Furthermore, the jig structure of automatic winding equipment in order to wind the stator coil wires in the state where they are attached to the stator is complicated for said lead lines.

The object of the present invention is to provide a resolver I/O terminal structure that is able to withstand use in a high-temperature environment, and to provide a connection method for resolvers using said structure, in order to resolve these problems.

### (Means by Which the Problems Are Solved)

In order to achieve the object described above, the resolver I/O terminal device described in Claim 1 is a resolver I/O terminal device in a resolver equipped with a stator assembly equipped with a core wherein there are multiple stacked plate-shaped units with protruding stator magnetic poles that have multiple stator magnetic pole teeth in a direction facing a center of a yoke part, one insulating member and another insulating member equipped on both sides of said stator core in the axial direction, and a lead line terminal block wherein the stator coils, which are wrapped on the stator magnetic poles, are connected to lead lines, wherein said lead line terminal block not only has embedded within it fastening pins for winding the stator coil terminals, but is also provided with multiple through holes and has a through groove in the direction in which said multiple through holes are lined up, and equipped with flat terminals, provided with flat terminal pin parts that contact said lead lines and stator coil wires, and are equipped horizontally on said lead line terminal blocks so as to cut across said through groove, where the tips of said lead lines are equipped with connection terminals that connect to said flat terminal pin parts.

The resolver I/O terminal structure of Claim 2 is a resolver I/O terminal structure according to Claim 1, wherein said lead line terminal block is not only formed with multiple lead line fastening grooves on one surface thereof, but the opposite surface is equipped with slack pins to guide the stator wires to the side wherein said multiple through holes are lined up, and fastening pins for wrapping the stator coil lead lines on the side opposite of where said slack pins are equipped, across said through groove, where said slack pins can be bent up easily from the base of said lead line terminal block.

The resolver I/O terminal structure of Claim 3 is a resolver I/O input structure according to Claim 1 or 2, where said lead line terminal block is fabricated with a surface whereon said fastening pins and slack pins are provided, and fabricated with a mating protrusion part on the other surface, where said mating protrusion part fits together with through holes fabricated in either said one insulating member or said other insulating member.

The resolver I/O terminal structure of Claim 4 is a resolver I/O terminal structure according to Claim 1, 2, or 3, wherein said lead line terminal block is fabricated with a rim part that contacts the stator core on the surface on the side opposite from said mating protrusion part.

The resolver I/O terminal structure of Claim 5 is a resolver I/O terminal structure according to any of Claims 1-4, wherein said lead line terminal block is fabricated separately from the one insulating member and from said other insulating member.

The resolver I/O terminal structure of Claim 6 is a resolver I/O terminal structure according to any of Claims 1-4, wherein said lead line terminal block is structured as an integrated unit with said one insulating member or with said other insulating member.

The resolver I/O terminal structure of Claim 7 is a resolver I/O terminal structure according to any of Claims 1-4, wherein said lead line terminal block is structured from a top terminal block and a bottom terminal block split between one surface and another surface, where said top terminal block is structured as an integrated unit with one insulating member, and said bottom terminal block is structured as an integrated unit with said other insulating member.

The resolver I/O terminal structure of Claim 8 is a resolver I/O terminal structure according to Claim 1, wherein said flat terminal is such that said flat terminal pin part is deflected to an angle of approximately 90 degrees relative to the flat terminal and is not only inserted into an aforementioned through hole, but also passes through the other surface so that the flat terminal pin part that is passed through said through hole connects to a connector terminal equipped along said lead line fastening groove.

The resolver I/O terminal structure of Claim 9 is a resolver I/O terminal structure according to Claim 1, wherein said flat terminal is fabricated with a rim-shape weld part bent at the location wherein said through groove is crossed.

The resolver I/O terminal structure of Claim 10 is a resolver connection method in a resolver I/O terminal structure in a stator assembly equipped with a stator core, wherein there are multiple plates that are stacked with protruding stator magnetic poles that have multiple stator magnetic pole teeth that are protruding in the direction towards the center of a yoke part, one insulating member and another insulating member equipped, respectively, on both sides of said stator core, and a lead line terminal block wherein the lead lines for stator coils that are wound around said stator magnetic poles are connected, where said stator core is fabricated with a protruding part that has within it an indented part so as to fit with said lead line terminal block, where said lead line terminal block not only has multiple through holes and through grooves that are fabricated in the direction in which said multiple through holes are lined up, but also has, on one surface, mating protrusion parts that mate with the through holes fabricated on either one of said insulating parts, as well as multiple lead line fastening grooves, where, on the other surface that is not said one surface, not only are there are embedded fastening pins upon which the stator coil terminals are wound along with slack pins that can be bent easily from the base position of said lead line terminal block, established and embedded in both sides of said through grooves, but also flat terminals equipped with flat terminal pin parts, which connect said lead lines to said stator coil lines, are equipped so as to cut across said through grooves, while, additionally, not only is there a rim part that mates with the stator core fabricated in said other surface and fastening protrusion parts fabricated in said other surface to mate with the through holes fabricated in said flat terminals, but also, said flat terminals are fabricated so that the weld part of said rim is fabricated in a place that cuts across said through groove and said flat terminal pin parts are bent to approximately 90 degrees to a direction that can be inserted into the multiple through holes fabricated in said lead line terminal block, wherein said resolver connection method is characterized by fastening the lead line terminal block, to which the flat terminals have been attached, to the stator core, winding the stator coils, using resistive welding to weld said weld parts to said stator coils, and arc welding said flat terminal pin parts and the connector terminals.

The resolver I/O terminal structure of Claim 11 is a resolver connection method according to Claim 10, wherein, after fitting, into an indentation fabricated in a protrusion of the stator core, a lead line terminal part, wherein said fastening protrusions mate with through holes fabricated in the flat terminals, through the insertion of said flat terminal pin parts into said multiple through holes, the one insulating member and the other insulating member are each tightly fitted from both sides of the stator core in order to mate the through holes fabricated in one or the other of the aforementioned insulating members with the aforementioned mating protrusion parts, and the tips of said mating protrusion parts are affixed in the insulating member to form a stator assembly.

The resolver I/O terminal structure of Claim 12 is a resolver connection method according to Claim 10, wherein stator coil leads are wrapped on said stator assembly, and the ends of said wrapped stator coil leads are passed through the slack pins and between the weld parts that are fabricated with a bend in said flat terminals, after which the tips thereof are wrapped on fastening pins, where the stator coil lead lines that are passed between said weld parts are welded to the flat terminals at said weld parts through resistive welding of said weld parts after inserting the electrodes of the resistive welder from the top and bottom of said through groove, and then bending said slack pins.

The resolver I/O terminal structure of Claim 13 is a resolver connection method according to Claim 10, wherein connection terminals of lead lines wherein connection terminals are pressed onto the tips thereof are equipped along said lead line affixing groove to mate with said connection terminals at said flat terminal pin part, which have passed through said one surface after being inserted into said multiple through holes, where said flat terminal pin part and the connection terminals are then arc welded together.

### (Forms of Embodiment of the Present Invention)

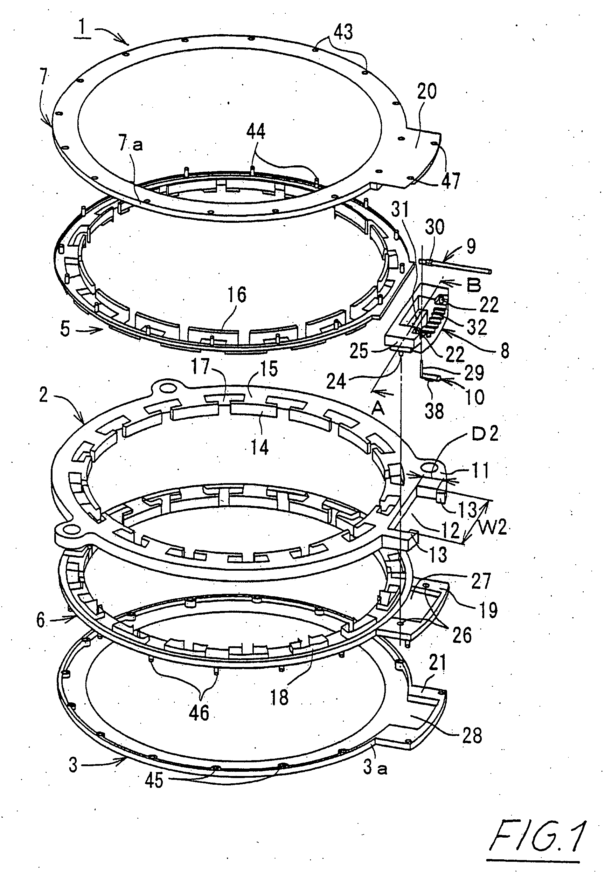

In order to understand the resolver I/O terminal structure of the present invention, the structure of the stator assembly 1 of the present invention, according to Figure 1, will be explained below based on an assembly diagram. In said stator assembly 1, stator coil wires, such as polyamidimid wires, which are capable of withstanding high temperatures, are wrapped, and the resolver is formed out of well-known stators, housings, etc. The stator assembly 1 is structured from a stator core 2, one insulating member 5 and another insulating member 6 equipped, respectively, on both sides of said stator core 2 in the axial direction, covers 7 and 3 equipped on the outsides thereof, and a lead line terminal block, fabricated separately from said one insulating member 5 and said other insulating member 6. Said covers 7 and 3 both have the same shape. Said insulating members 5 and 6, and said covers 7 and 3, are fabricated from, for example, polybutylene terephthalate. The stator core comprises multiple stacked plates with stator magnetic poles 15 with multiple stator magnetic pole teeth 14 directed in the direction of a yoke part. Stator coil wires, not shown, are wound on the stator magnetic poles 15. Rim parts 16, which assume the same plane as said stator magnetic pole teeth 14, and protrusions 44 and 46, which fit, respectively, into the holes 43 and 45 fabricated in the covers 7 and 3, are fabricated in the one insulating member 5 and the other insulating member 6.

The outer periphery of the stator core 2 is equipped with protrusions 11 wherein indentations 12 that mate with the lead line terminal blocks 8 are fabricated, where the tips 13 of said protrusions 11 are fabricated to be bent, so that they do not deviate from the outer periphery direction when mated with said lead line terminal blocks 8 from the axial direction, not shown, of the stator 2. Protrusion parts 19 are fabricated in the other insulating member 6, where said protrusion parts 19 are equipped with notched parts 27 into which said lead line terminal blocks 8 can fit, and equipped with through holes 26 on the outside thereof. Similarly, the cover 3 is also equipped with protrusions 21 that have the same shape as the aforementioned protrusions 19, where said protrusions 21 are fabricated with indentations 28 into which said lead line terminal blocks 8 can fit.

Said lead line terminal block 8 is fabricated from materials able to withstand high temperatures and that are strong insulators, such as Teflon ®, and are equipped with flat terminals 10 (described below), which are provided with flat terminal pin parts 29 for connecting the lead lines 9 and the stator coil wires. Said lead lines 9 are disposed in multiple lead line fastening grooves 32, described below. Fastening protrusions 22 are fabricated on both sides of said lead line fastening grooves 32. Said fastening protrusions 22 fit into the holes 47 that are fabricated in the cover 7, and secure the lead line terminal blocks 8 and the cover 7. Furthermore, mating protrusion parts 24 are fabricated, where said mating protrusion parts 24 fit into the through holes 26 equipped in the protrusion parts 19 fabricated in said other insulating member 6. Note that the protrusion parts fabricated in said other insulating member 6 and in said cover 3 may, conversely, [be fabricated in] the one insulating member 5 and the cover 7, in which case, the mating protrusion part 24 fabricated in said lead line terminal block 8 is equipped in the direction for mating with the one insulating member 5. Furthermore the lead line terminal block 8 is equipped with a rim part 25 that contacts the protrusion parts 11 of the stator core 2 on the surface that is on the opposite side from said mating protrusion part 24.

The lead line terminal blocks 8 fit into the indentation parts 12 of said stator core 2, where the mating parts 18 of the one insulating member 5 and of the other insulating member 6 are inserted into the coil wire part 17 from both sides of the stator coil 2 to cause the stator magnetic pole teeth 14 and the rim part 16 to align with each other. Furthermore, the outsides of the one insulating member 5 and the other insulating member 6 are covered with covers 7 and 3, where the protrusion parts 44 and 46 on the one insulating member 5 and the other insulating member 6 fit into the holes 43 and 45 in the covers 7 and 3 to form the stator assembly 1.

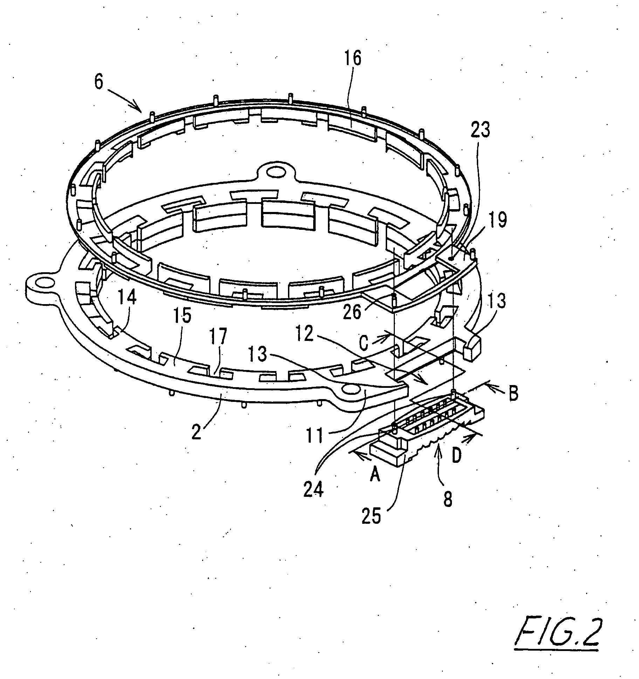

Figure 2 is a figure wherein the other insulating member 6 and the stator core 2 are shown turned upside down from [that which is shown] in Figure 1 in order to more easily understand the lead terminal blocks 8. As is shown in Figure 2, the lead line terminal blocks 8 contact the rim 25 on the side wherein the one insulating member 5 is equipped on the tips 13 of the protrusion parts 11 fabricated on the outer periphery of the stator core 2. The mating protrusion parts 24 fit into the through holes 26 fabricated in the other insulating member 6.

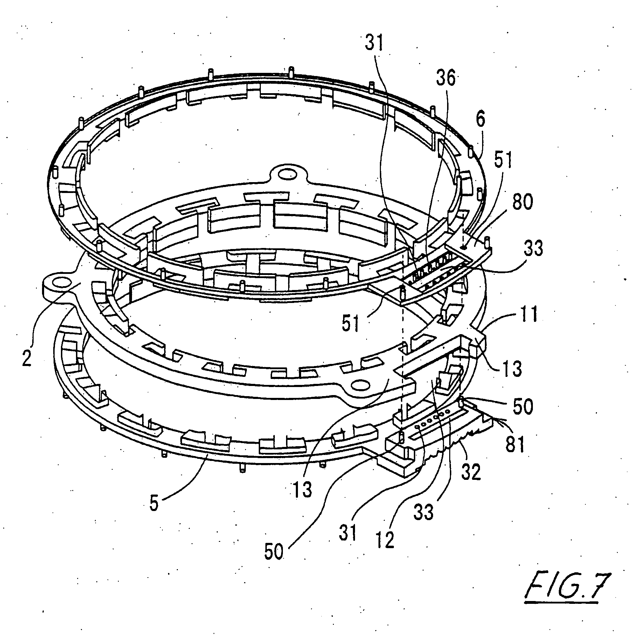

As is shown in Figure 6, the flat terminals 10 are fabricated out of, for example, phosphor copper, which can be resistively welded or arc welded, and flat terminal pin parts 29, to which the lead lines 9 attach, are equipped on the tips thereof, where the flat terminal pin parts 29 are bent to approximately 90 degrees relative to the terminal parts 40. Furthermore, through holes 39 are fabricated on the edge that is opposite of the edge on which the flat terminal pin parts 29 are fabricated, where the protrusion parts 41 fabricated on the lead line terminal parts 8 fit into said through holes 39. In addition, the rim-shaped weld parts 38 are fabricated on the opposite sides of the terminal parts 40 from the sides whereon the flat terminal pin parts 29 are bent, fabricated so as to provide a space through which the stator coil wires pass. The tips of the stator coil wires, not shown, are resistively welded to said weld parts 38 after passing through said gap between said weld parts 38.

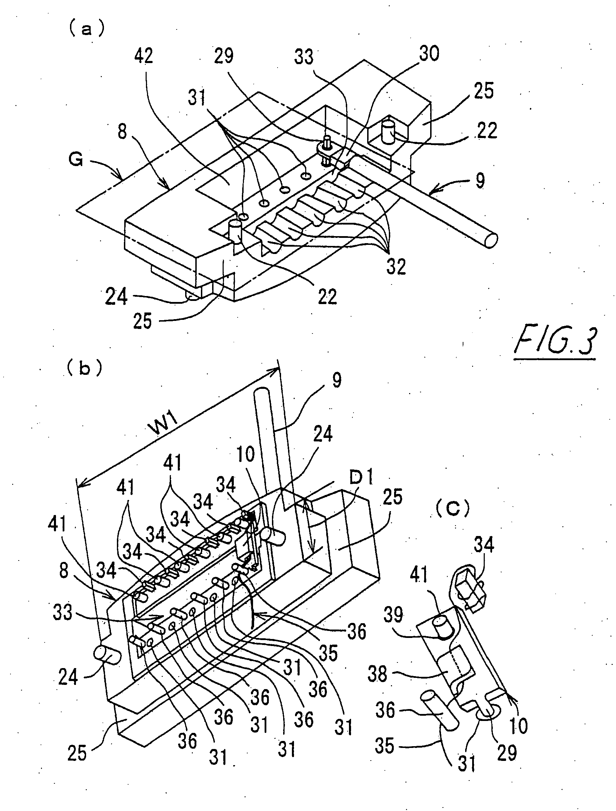

Figure 3 is used to explain the structure of the lead line terminal blocks 8. The top surface of the lead line terminal block 8 is fabricated with an indentation, where multiple lead line fastening grooves 32, fastening protrusion parts 22, multiple through holes 31, and through grooves 33 are each fabricated, as described below, in said indentation part. The fastening protrusion parts 22 are fabricated both sides of each individual lead line fastening groove 32. Said fastening protrusion parts 22 are formed so as to be higher than the top surface of the lead line terminal part 8, so as to fit into the holes 47 fabricated in the cover 7, to thereby secure the lead line terminal block 8 and the cover 7. Multiple through holes 31, which pass through the bottom surface of the lead line terminal block 8, are fabricated at the positions opposite the lead line fastening groove 32. A through groove 33, which passes through the bottom surface of the lead line terminal block 8, between the lead line fastening groove 32 and the multiple through holes 31, in the direction in which said which multiple through holes 31 are lined up. The respective lead line fastening grooves are equipped with lead lines 9, which are provided with connection terminals 30, which are connected at their tips to the flat terminal pin parts 29 using arc welding. The flat terminal pin parts 29, as described below, are equipped on the top surface of the lead line terminal block 8, passing through the respective through holes 31 from the bottom surface of the lead line terminal block 8. Furthermore, the outer surface of the fastening protrusion part 22 is fabricated with a rim part 25 that contacts the protrusion part 11 of the fixed core 2.

The bottom surface of the lead line terminal block 8 is fabricated with an indentation part, where not only do the multiple through holes 31 and the through groove 33 pass through the top surface of the lead line terminal block 8, but protrusion parts 41 are fabricated in the indentation part, and multiple slack pins 36 and fastening pins 34 are embedded therein. The width W1 and depth D1 of the bottom surface of the lead line terminal block 8 are, respectively, approximately the same as the width W2 and the depth D2 of the indentation part 12 of the stator core 2 so that the lead line terminal block 8 can fit into the indentation part 12 of the stator core 2. The slack pins 36 for guiding the stator coil wire are equipped between said multiple through holes 31. Said slack pins 36 are engraved with a notch at, for example, the base thereof, so as to be able to be bent easily from the base of said lead line terminal block. On the opposite side from where the aforementioned slack pins 36 are equipped, crossing said through groove 33, there are equipped fastening pins 31 on which the stator coil wire tips are wrapped. Said fastening pins 34 preferably have an essentially rectangular pillar shape so that the stator coil wire wrapped thereon does not come off, and should be equipped and disposed so as to be mutually at an angle with the flat terminals 10.

The aforementioned flat terminals 10 are equipped so as to cut across the aforementioned through grooves 33, where the flat terminal pin parts 29 are inserted from the bottom surface of the lead line terminal blocks 8 into the aforementioned through holes 39 and pass through the top surface thereof. The flat terminal pin parts 29 that have been passed through in this way have a height that is less than that of the indentation parts of the lead line terminal blocks 8, and are connected to the connection terminals on the tips of the lead lines 9 that are disposed in said lead line fastening grooves 32. Note that the protrusion parts 41 are fitted into the through holes 39 of said flat terminals 10. The stator coil wire tips 35 are passed through the gaps of the rim-shaped weld parts 38 formed on the flat terminals 10, past the slack pins 36, and are wrapped several times around the fastening pins 34. The stator coil wire that passes through the gaps in the weld part 38 is subjected to resistive welding, described below. Mating protrusion parts 24 that are held in the direction in which the slack pins 36 are established, or in other words, in the direction of the other insulating member 6 are fabricated at both ends of the lead line fastening grooves 32. These mating protrusion parts 24 are fitted into the through holes 26 that are equipped in the protrusion parts 19 of the other insulating member 6.

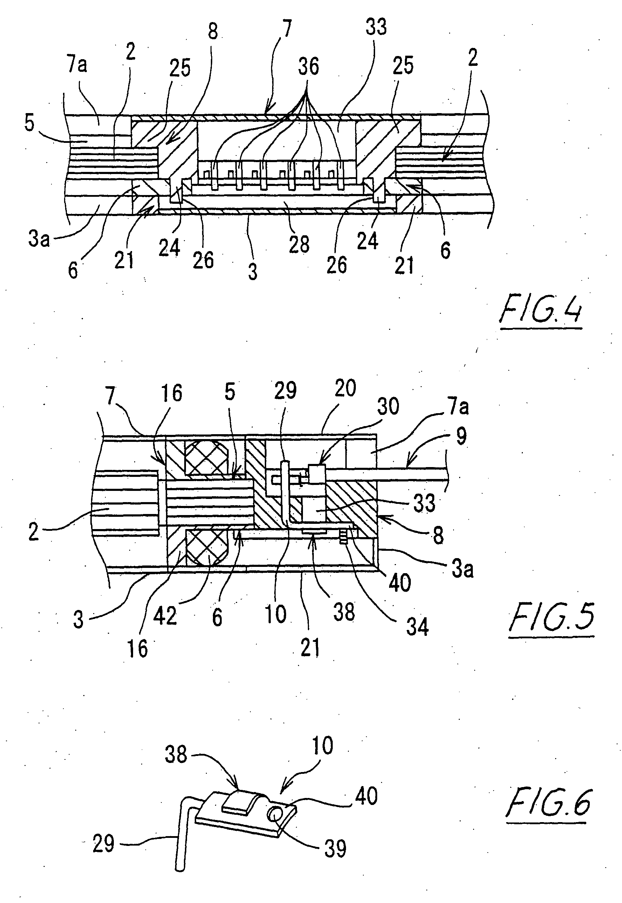

Figures 4 and 5 will be used to explain the stator assembly unit 1 wherein the lead line terminal blocks 8, which are fabricated separately from the stator core 2, are fitted, and where covers 7 and 3 are provided on the outside of the one insulating member 5 and the other insulating member 6, provided on both sides thereof. The lead line terminal blocks 8, which are fitted into the indentation parts in the stator core 2, contact the rim part 25 of the protrusion part 11 of the stator core 2. The mating protrusion parts 24 fit into the through holes 26 fabricated in the other insulating member 6. For the one insulating member 5 contacts the protrusion parts 20 of the cover 7, and contacts the surrounding standing wall 7a, while the other insulating member 6 contacts the protrusion parts 21 in the cover 3, and contacts the surrounding standing wall 3a.

Figure 7 is an assembly diagram of a fixed stator assembly structured with said lead line terminal block and said insulating member integrated into a single unit, where the lead line terminal blocks 8 are split in half horizontally from part G shown in Figure 3(a), in a structure where said separate units are equipped with, respectively, one insulating member 5 and another insulating unit 6. In other words, the part above part G shown in Figure 3(a) is fabricated into protrusions 81 on the one insulating member 5, and the part below the G part shown in Figure 3(a) is fabricated into protrusion parts 80 on the other insulating member 6. Note that the structure of the stator core 2 is the same as in the example embodiment in Figure 1.

In Figure 7, the symbols are the same for the same parts as explained in Figures 1 and 3, and thus their explanations will be omitted. The other insulating member 5 has protrusion parts 81 on its periphery, where the protrusion parts 81 are fabricated with multiple through holes 31 and through grooves 33. Furthermore, on the side of the protrusion part 81 that is opposite the side that contacts the stator core 2, or in other words, the side that supports the cover (7), not shown, multiple lead line fastening grooves 32 are fabricated, as shown in Figure 3(a). Protrusion parts 50 are fabricated at both ends of the through groove 33, on the side wherein the protrusion part 81 contacts the stator core 2.

The other insulating member 6 has protrusion parts 80 about its outer periphery, where multiple through holes 31 and through grooves 33 are fabricated in said protruding parts 80. Furthermore, indentations are fabricated on the side that is opposite of the side of the protrusion parts 80 that contact the stator core 2, or in other words, on the side that supports the cover (3), not shown, where multiple through holes 31 and through grooves 33 pass through the inside of said indentation part. Furthermore, protrusion parts 41 are fabricated on one side of the through grooves 33, and there are embedded fastening pins 34. On the other side of said through groove 33, multiple slack pins 36 are embedded between the multiple through holes 31, fabricated as shown in Figure 3(b). The aforementioned slack pins 36 can be bent easily from the base of said lead line terminal block, for example, with a notch engraved at the base thereof. The protrusion part 80 is fabricated with through holes 51 on both ends of the through groove 33. The indentation parts 12 fabricated in the protrusion parts of the stator core not only mate with said protrusion parts 80 and 81, but said protrusion parts 50 fit into the through holes 51, and the tips thereof are welded so that the one insulating member 5 and the other insulating member 6 are secured to both sides of the stator core 2.

The stator assembly 1 in Figure 1 is assembled as described below. In other words, the flat terminal pin parts 29 are inserted into the multiple through holes 31 and the lead terminal blocks 8, for which said fastening protrusion parts 41 are mated with the through holes 39 fabricated in the flat terminals 10, are mated with the indentation parts 12 fabricated on the protrusion parts 11 of the stator core 2. The one insulating member 5 and the other insulating member 6 are fitted tightly from both sides of the stator core 2, where the aforementioned mating protrusion parts 24 are mated with the through holes 26 and the tips of said mating protrusion parts 24 are welded to fasten the one insulating member 5 and the other insulating member 6 to the stator core 2 to assemble the stator assembly unit.

Figure 3 will be referenced, below, to explain the resolver connection method using the stator assembly unit 1 in Figure 1, described above. The stator coil wires, not shown, are wrapped on the respective magnetic poles of the stator assembly unit 1, where the tips 35 of the stator coil wires thus wrapped are wrapped onto the tips of the fastening pins 34 after passing between the weld parts 38 fabricated by bending the flat terminals 10, and passing the slack pins 36. The electrodes of a resistive welder, not shown, are inserted into the through grooves 33 to push on the weld part from the top and the bottom to perform the resistive welding. The result is that the stator coil wires 35 that pass through the weld parts 38 are attached to the flat terminals 10 by the weld parts 38. The aforementioned slack pins 36 are then bent out.

Next, connector terminals 30, the tips of which being press fitted onto the lead lines 9, are equipped along the lead line fastening groove 32, where said connector terminals 30 mate with the flat terminal pin parts 29 that are inserted into the multiple through holes 31 and that pass through one surface [thereof], and said flat terminal pin parts 29 and connection terminals 30 are arc welded [together]. Said lead lines 9 are connected to the stator coil wires 35 that are welded to the flat terminals 10 at the weld part 38 by said flat terminal pin parts 29. Note that the bending out of said slack pin 36 can be done after completing said arc welding.

The stator assembly unit 1 in Figure 7 is assembled as described below. In other words, not only are the flat terminal pin parts 29 inserted into the multiple through holes 31 fabricated in the one insulating member 5, but also the through holes 39 fabricated in the flat terminals 10 are mated with the fastening protrusion parts 41, and the flat terminal parts 10 are secured so as to cut across the through grooves 33. The protrusion parts 81 and 80 of the one insulating member 5 and the other insulating member 6 are tightly fitted into the indentation parts 12 of the stator core 2 from both sides of the stator core 2, where the through holes 51 and protrusion parts 50 are mated together and the tips of said protrusion parts 50 are welded to secure the one insulating member 5 and the other insulating member 6 to the stator core 2, to thereby assemble the stator assembly unit.

Next Figure 3 will be referenced in explaining, below, the resolver attachment method using the stator assembly unit 1 in Figure 7, described above. The stator coil wires, not shown, are wrapped onto each of the magnetic poles of the stator assembly unit 1, and the tips 35 of the stator coil wires thus wrapped are passed past the slack pins 36 and through the space between the weld parts 38 that are bent and fabricated on the flat terminals 10, after which they are wrapped onto the tips of the fastening pins 34. The electrodes of a resistive welder, not shown, are inserted into the through grooves 33 to perform resistive welding while pushing on the top and bottom of the weld part. The result is that the stator coil wires 35 that pass through the weld parts 38 are welded onto the flat terminals 10 by the weld parts 38. The aforementioned slack pins 36 are then bent out.

Next the connection terminals 30, the tips of which being press-fitted onto the lead lines 9, are disposed along the lead line fastening grooves 32, where said connection terminals 30 are mated with the flat terminal pin parts 29 that have been inserted into the multiple through holes 31 and passed through one surface thereof, and the flat terminal pin parts 29 and the connection terminals 30 are arc welded [together]. Said lead lines 9 are connected to the stator coil wires 35, which have been welded to the flat terminals 10 by the weld parts 38, through the aforementioned slack pins 36.

### (Effects of the Invention)

The resolver I/O terminal structure according to Claim 1 makes it possible for the aforementioned lead line terminal blocks to not only have fastening pins, on which the stator coil wire tips are wrapped, embedded therein, but also to have multiple through holes and through grooves in the direction said multiple through holes are lined up, so that the flat terminals that are provided with flat terminal pin parts that connect said lead lines and the stator coil wires [together] are equipped horizontally on said lead line terminal blocks so as to cut across said through grooves to make it possible to provide connection terminals that connect the tips of said lead lines to said flat terminal pin parts, thereby making it possible to not only reduce the size of the terminal plates, but also making it possible to produce small resolvers for high ambient temperatures, wherein, for example, polyamidimid wires, or the like, which have strong and robust insulation, can be used for the resolver stator coils because it is possible to insert the electrodes of a resistive welder into said through grooves easily. Furthermore, said lead lines need not be wrapped onto the stator coil lines after the stator has been installed, simplifying the structure of the jigs for the automatic winders, thereby simplifying automation.

In the resolver I/O terminal structure according to Claim 2 said lead line terminal block is not only formed with multiple lead line fastening grooves on one surface thereof, but the opposite surface is equipped with slack pins to guide the stator wires to the side wherein said multiple through holes are lined up, and fastening pins for wrapping the stator coil lead lines on the side opposite of where said slack pins are equipped, across said through groove, where said slack pins can be bent up easily from the base of said lead line terminal block, thus eliminating the need to wrap the stator coil wires with said lead lines attached to the stator, [thereby] simplifying the structure of the jig in the automatic winding equipment. Furthermore, although there are slack pins equipped in conventional jigs, said slack pins can be bent out easily from the bases of the aforementioned lead line terminal blocks, simplifying the jig structure.

In the resolver I/O terminal structure according to Claim 3, said lead line terminal block is fabricated with a surface whereon said fastening pins and slack pins are provided, and fabricated with a mating protrusion part on the other surface, where said mating protrusion part fits together with through holes fabricated in either said one insulating member or said other insulating member, thus making it possible to secure said mating protrusion parts in the axial direction through welding.

In the resolver I/O terminal structure according to Claim 4, said lead line terminal block is fabricated with a rim part that contacts the stator core on the surface on the side opposite from said mating protrusion part, thus not only making it possible to simplify the positioning relative to the axial direction, but also fastening in the axial direction.

In the resolver I/O terminal structure according to Claim 5, said lead line terminal block is fabricated separately from the one insulating member and from said other insulating member, not only increasing the degrees of freedom in the design, but also making it possible to use lead line terminal blocks suitable to specifications such as high temperature ambient environments.

In the resolver I/O terminal structures according to Claims 6 and 7, said lead line terminal block is structured as an integrated unit with said one insulating member or with said other insulating member and said lead line terminal block is structured from a top terminal block and a bottom terminal block split between one surface and another surface, thus not only making it possible to simplify the structure in the resolver when used in a use environment that is not as harsh, but also making it possible to reduce costs.

In the resolver I/O terminal structure according to Claims 8 and 9, said flat terminal is such that said flat terminal pin part is deflected to an angle of approximately 90 degrees relative to the flat terminal and is not only inserted into an aforementioned through hole, but also passes through the other surface so that the flat terminal pin part that is passed through said through hole connects to a connector terminal equipped along said lead line fastening groove, where said flat terminal is fabricated with a rim-shape weld part bent at the location wherein said through groove is crossed, thus making it possible to use a resistive welder to weld together the stator wires and the weld parts easily.

In the resolver connection method according to Claim 10, the lead line terminal block, to which the flat terminals have been attached, is fastened to the stator core, the stator coils are wound, resistive welding is used to weld said weld parts to said stator coils, and said flat terminal pin parts and the connector terminals are arc welded, thus simplifying automation.

In the resolver connection method according to Claim 11, after fitting, into an indentation fabricated in a protrusion of the stator core, a lead line terminal part, wherein said fastening protrusions mate with through holes fabricated in the flat terminals, through the insertion of said flat terminal pin parts into said multiple through holes, the one insulating member and the other insulating member are each tightly fitted from both sides of the stator core in order to mate the through holes fabricated in one or the other of the aforementioned insulating members with the aforementioned mating protrusion parts, and the tips of said mating protrusion parts are affixed to the insulating member to form a stator assembly , thus providing a stator assembly unit for which the winding of the stator coil wires is easy.

In the resolver connection method according to Claim 12, stator coil leads are wrapped on said stator assembly, and the ends of said wrapped stator coil leads are passed through the slack pins and between the weld parts that are fabricated with a bend in said flat terminals, after which the tips thereof are wrapped on fastening pins, where the stator coil lead lines that are passed between said weld parts are welded to the flat terminals at said weld parts through resistive welding of said weld parts after inserting the electrodes of the resistive welder from the top and bottom of said through groove, and then bending said slack pins, thus making it possible to connect the resolver using a simple jig structure.

The resolver I/O terminal structure according to Claim 13, connection terminals of lead lines wherein connection terminals are pressed onto the tips thereof are equipped along said lead line affixing groove to mate with said connection terminals at said flat terminal pin part, which have passed through said one surface after being inserted into said multiple through holes, where said flat terminal pin part and the connection terminals are then arc welded together, thus making it possible to connect the resolver using a simple automatic coil wire jig structure.

### (Simple Explanation of Drawings)

- Figure 1: shows an assembly diagram of a stator assembly unit according to the present invention;
- Figure 2: shows an assembly diagram of the stator core, the other insulating member, and the lead line terminal blocks according to the present invention;
- Figure 3: shows an oblique view of a lead line terminal block according to the present invention, where
- Figure 3(a): is an oblique view of the top,
- Figure 3(b): is an oblique view of the bottom, and
- Figure 3(c): is an expanded view of the area around the flat terminal.;
- Figure 4: shows a cross-sectional view along section A-B of Figure 2 of a stator assembly according to the present invention;
- Figure 5: shows a cross-sectional view along section C-D of Figure 2 of a stator assembly according to the present invention;
- Figure 6: shows an oblique view of a flat terminal according to the present invention;
- Figure 7: shows an assembly diagram showing another example embodiment of a stator assembly unit according to the present invention;
- Figure 8: shows a front view (a) and back view (b) of a conventional resolver stator;
- Figure 9: shows a conventional terminal plate, and
- Figure 10: shows a conventional lead line.

### (Explanation of Reference Numbers)

- 1:: Stator Assembly Unit
- 2:: Stator Core
- 3,7:: Covers
- 5,6:: Insulating Members
- 8:: Lead Line Assembly Block
- 9:: Lead Line Terminal Block
- 10:: Flat Terminal
- 29:: Flat Terminal Pin Part
- 34:: Fastening Pin
- 36:: Slack Pin
- 38:: Weld Part

## Claims

1. A resolver I/O terminal device in a resolver equipped with a stator assembly equipped with a core wherein there are multiple stacked plate-shaped units with protruding stator magnetic poles that have multiple stator magnetic pole teeth in a direction facing a center of a yoke part, one insulating member and another insulating member equipped on both sides of said stator core in the axial direction, and a lead line terminal block wherein the stator coils, which are wrapped on the stator magnetic poles, are connected to lead lines,
wherein said lead line terminal block not only has embedded within it fastening pins for winding the stator coil terminals, but is also provided with multiple through holes and has a through groove in the direction in which said multiple through holes are lined up, and equipped with flat terminals, provided with flat terminal pin parts that contact said lead lines and stator coil wires, and are equipped horizontally on said lead line terminal blocks so as to cut across said through groove,
where the tips of said lead lines are equipped with connection terminals that connect to said flat terminal pin parts.

2. A resolver I/O terminal structure according to Claim 1, wherein said lead line terminal block is not only formed with multiple lead line fastening grooves on one surface thereof, but the opposite surface is equipped with slack pins to guide the stator wires to the side wherein said multiple through holes are lined up, and fastening pins for wrapping the stator coil lead lines on the side opposite of where said slack pins are equipped, across said through groove, where said slack pins can be bent up easily from the base of said lead line terminal block.

3. A resolver I/O input structure according to Claim 1 or 2, where said lead line terminal block is fabricated with a surface whereon said fastening pins and slack pins are provided, and fabricated with a mating protrusion part on the other surface,
where said mating protrusion part fits together with through holes fabricated in either said one insulating member or said other insulating member.

4. A resolver I/O terminal structure according to Claim 1, 2, or 3, wherein said lead line terminal block is fabricated with a rim part that contacts the stator core on the surface on the side opposite from said mating protrusion part.

5. A resolver I/O terminal structure according to any of Claims 1-4, wherein said lead line terminal block is fabricated separately from the one insulating member and from said other insulating member.

6. A resolver I/O terminal structure according to any of Claims 1-4, wherein said lead line terminal block is structured as an integrated unit with said one insulating member or with said other insulating member.

7. A resolver I/O terminal structure according to any of Claims 1-4, wherein said lead line terminal block is structured from a top terminal block and a bottom terminal block split between one surface and another surface, where said top terminal block is structured as an integrated unit with one insulating member, and said bottom terminal block is structured as an integrated unit with said other insulating member.

8. A resolver I/O terminal structure according to Claim 1, wherein said flat terminal is such that said flat terminal pin part is deflected to an angle of approximately 90 degrees relative to the flat terminal and is not only inserted into an aforementioned through hole, but also passes through the other surface so that the flat terminal pin part that is passed through said through hole connects to a connector terminal equipped along said lead line fastening groove.

9. A resolver I/O terminal structure according to Claim 1, wherein said flat terminal is fabricated with a rim-shape weld part bent at the location wherein said through groove is crossed.

10. A resolver connection method in a resolver I/O terminal structure in a stator assembly equipped with a stator core, wherein there are multiple plates that are stacked with protruding stator magnetic poles that have multiple stator magnetic pole teeth that are protruding in the direction towards the center of a yoke part, one insulating member and another insulating member equipped, respectively, on both sides of said stator core, and a lead line terminal block wherein the lead lines for stator coils that are wound around said stator magnetic poles are connected, where said stator core is fabricated with a protruding part that has within it an indented part so as to fit with said lead line terminal block,
where said lead line terminal block not only has multiple through holes and through grooves that are fabricated in the direction in which said multiple through holes are lined up, but also has, on one surface, mating protrusion parts that mate with the through holes fabricated on either one of said insulating parts, as well as multiple lead line fastening grooves,
where, on the other surface that is not said one surface, not only are there are embedded fastening pins upon which the stator coil terminals are wound along with slack pins that can be bent easily from the base position of said lead line terminal block, established and embedded in both sides of said through grooves, but also flat terminals equipped with flat terminal pin parts, which connect said lead lines to said stator coil lines, are equipped so as to cut across said through grooves, while, additionally, not only is there a rim part that mates with the stator core fabricated in said other surface and fastening protrusion parts fabricated in said other surface to mate with the through holes fabricated in said flat terminals, but also, said flat terminals are fabricated so that the weld part of said rim is fabricated in a place that cuts across said through groove and said flat terminal pin parts are bent to approximately 90 degrees to a direction that can be inserted into the multiple through holes fabricated in said lead line terminal block;
wherein said resolver connection method is **characterized by** fastening the lead line terminal block, to which the flat terminals have been attached, to the stator core, winding the stator coils, using resistive welding to weld said weld parts to said stator coils, and arc welding said flat terminal pin parts and the connector terminals.

11. A resolver connection method according to Claim 10, wherein, after fitting, into an indentation fabricated in a protrusion of the stator core, a lead line terminal part, wherein said fastening protrusions mate with through holes fabricated in the flat terminals, through the insertion of said flat terminal pin parts into said multiple through holes, the one insulating member and the other insulating member are each tightly fitted from both sides of the stator core in order to mate the through holes fabricated in one or the other of the aforementioned insulating members with the aforementioned mating protrusion parts, and the tips of said mating protrusion parts are affixed to the insulating member to form a stator assembly.

12. A resolver connection method according to Claim 10, wherein stator coil leads are wrapped on said stator assembly, and the ends of said wrapped stator coil leads are passed through the slack pins and between the weld parts that are fabricated with a bend in said flat terminals, after which the tips thereof are wrapped on fastening pins, where the stator coil lead lines that are passed between said weld parts are welded to the flat terminals at said weld parts through resistive welding of said weld parts after inserting the electrodes of the resistive welder from the top and bottom of said through groove, and then bending said slack pins.

13. A resolver connection method, according to Claim 10, wherein connection terminals of lead lines wherein connection terminals are pressed onto the tips thereof are equipped along said lead line affixing groove to mate with said connection terminals at said flat terminal pin part, which have passed through said one surface after being inserted into said multiple through holes, where said flat terminal pin part and the connection terminals are then arc welded together.
